**Europäisches Patentamt**

**European Patent Office**

**Office européen des brevets**

(19)

(11) Publication number: **0 040 936**
A1

# EUROPEAN PATENT APPLICATION

(12)

(21) Application number: **81302165.6**

(22) Date of filing: **15.05.81**

(51) Int. Cl.³: **B 60 L 11/18, H 02 P 7/16**

(30) Priority: **21.05.80 US 151973**

(43) Date of publication of application: **02.12.81**
**Bulletin 81/48**

(84) Designated Contracting States: **DE FR GB IT**

(71) Applicant: **THE FRANKLIN INSTITUTE, 20th and The Benjamin Franklin Parkway, Philadelphia Pennsylvania 19103 (US)**

(72) Inventor: **Belsterling, Charles A., 931 Greenbriar Drive, Norristown Pennsylvania 19401 (US)**
Inventor: **Stone, John, 6, East Delaware Trail, Medford New Jersey 08055 (US)**

(74) Representative: **Newby, John Ross et al, J.Y. & G.W. Johnson Furnival House 14/18 High Holborn, London WC1V 6DE (GB)**

(54) **DC Motor control system and method of DC motor control.**

(57) A d.c. generator 36 is connected in series opposed to the polarity of a d.c. power source 34 supplying a d.c. drive motor 32. The generator 36 is part of a motor/generator set, the motor 38 of which is supplied from the power source 34 connected to the drive motor 32. A generator field control means 44 varies the field produced by at least one of the generator field windings 36a in order to change the effective voltage output of the generator 36. When the generator voltage is exactly equal to the d.c. voltage supply, no voltage is applied across the drive motor 32. As the field of the generator 36 is reduced, the drive motor 32 is supplied with an increasing voltage until the full voltage of the d.c. power source 34 is supplied when the generator 36 has zero field applied. Additional voltage may be applied across the drive motor 32 by reversing and increasing the reversed field on the generator 36. The drive motor 32 may be made to rotate in the opposite direction from standstill by increasing the generator field so that a reverse voltage is applied across the d.c. motor 32. The system has particular application to vehicular drives. Reactive braking is possible, energy extracted from the vehicle 30 by the motor 32 being fed back to the battery 34. The power source can be a.c., the motor 38 then being an a.c. motor and the battery 34 a rectifier circuit.

## DC MOTOR CONTROL SYSTEM AND METHOD OF DC
## MOTOR CONTROL

The present invention relates to an improved system and method of controlling d.c. motors using a motor/generator set, the field of whose generator is a controlled variable. More specifically the present invention relates to an improved d.c. motor control system for vehicular applications permitting smooth speed transition in both forward and reverse direction and automatic regenerative braking as speed in either direction is reduced.

In view of the increasing expense and possible short supply of gasoline and other conventional fuels, considerable effort has been devoted to finding a suitable electrical traction system for automobiles and other vehicles. Ordinarily, in thinking of traction motors, direct current motors have been considered, and the present invention is directed to control of a direct current motor for this and other purposes.

The most direct and obvious method for controlling the electrical power dissipated in a load, be it a direct current motor or other load connected to a fixed voltage source, is by means of a variable series resistance. This method is extremely inefficient, however, because large amounts of energy are dissipated as heat. Thus, at half voltage, an equal amount of energy to that consumed by the load is dissipated as heat by the variable resistance.

The control method most widely used in early electric vehicles was battery switching where cells were connected into several equal groups, and the total voltage fed to the load was varied in steps by means of mechanical contactors. This method historically has suffered from the arcing effects of switching extremely high d.c. currents in an inductive circuit. It also results in poor control characteristics.

For many years the accepted way to control a high power variable d.c. motor was by means of a Ward-Leonard System which employs a motor/generator set with a low power generator field control. Although highly efficient and quite versatile, such a system is large and heavy because all the power to the d.c. motor must flow through the generator. Such a system is still used on large off-the-road vehicles where a lingering weight penalty can be tolerated. But, it is impractical for use on small vehicles.

In recent years the solid-state electronic "chopper" has become a common control for an electric vehicle. It is operated as a fast acting line switch controlling the ratio of on-time to off-time. The cost effectiveness of regenerative braking circuits in chopper controllers is, however, questionable. Although claims are made for very high efficiencies, when motor losses, battery stress and radiation noise are considered, it is not clearly the "best choice".

The present invention, like the Ward-Leonard System, employs a motor/generator set which, however, is differently connected and differently employed. It avoids all of the limitations of the d.c. motor controllers previously used. It does so by employing a rotating machine to recirculate the power that must be "absorbed" by the controller and desirably also to "boost" the power received during regenerative braking.

According to one aspect of the invention there is provided a system for controlling a d.c. drive motor feeding power to a load, which system comprises a d.c. power source, a motor/generator set, the motor of which is connected to the d.c. power source and the d.c. generator of which is connected to the d.c. drive motor, the d.c. generator having at least one field winding and means to control the current through the said at least one field winding which is characterised in that one set of common polarity terminals of the d.c. power source and the d.c. generator are connected together and the other set of common polarity terminals are connected across the d.c. drive motor so that a rest condition of the d.c. drive motor is obtained when the d.c. generator is generating a voltage which is equal to the voltage of the d.c. power source, and so that if the load feeds power back to the d.c. drive motor, the latter acts as a generator, power therefrom being employed to drive the d.c. generator of the motor/generator set as a motor and thereby drive the motor of the motor/generator set as a generator to feed electrical power into the power source.

It will be seen therefore that by connecting the d.c. generator in series with the power source supplying the d.c. drive motor and the motor of the motor/generator set, the generator field control means can be used to vary the field produced by the at least one generator winding in order to change the effective voltage output of the generator. Thus when the generator voltage output is exactly equal to the d.c. voltage supply, no voltage actually appears across the drive motor and the latter is not driven. As the field of the generator is reduced, the drive motor is supplied with an increasing voltage until the full voltage of the d.c. power source is supplied to the drive motor (i.e. when the generator has a zero field applied thereto). A voltage in excess of that available from the d.c. voltage supply may be applied across the drive motor by reversing and then increasing the reversed field of the generator. By ensuring that the generator voltage can exceed the d.c. supply voltage, the drive motor can be reversed in rotational direction from standstill by increasing the generator field so that a reverse voltage is now applied across the d.c. motor.

As will appear hereafter, the power source may be an a.c. source which has suitable rectifier means to produce the direct current, in which case the motor employed in the motor/generator set may be a single-phase or three-phase a.c. motor, and when it is driven as a generator, the power is fed back into the a.c. power system. If a d.c. supply is used, either a battery or d.c. power lines, when the motor of the motor/generator set is run as a generator, d.c. power is fed back into the d.c. lines or into the battery to recharge the battery.

The present invention provides a number of advantages. For example, it enables zero current to be fed to the drive motor. When the drive motor is at a standstill, it permits the drive motor to be smoothly accelerated in the forward direction, or, alternatively, if the generator output is large enough, also in the reverse direction. The drive motor starts smoothly without need for current limiting devices of any sort and follows a smooth transition to higher speeds without discontinuity or any need for variable mechanical transmission means. Reversing the direction of the drive motor is accomplished simply by increasing the generator field past the point which is used to bring the drive motor to a standstill without the need for a change-over switch in the current leads to the drive motor.

For low speed forward motion the generator output voltage is normally subtracted from the power source voltage. Reducing the generator voltage to zero applies the full d.c. supply (e.g. battery) voltage to the drive motor. Reversing the generator field, in effect, causes the generator voltage to be added to the d.c. supply voltage and gives an increased drive motor speed and load capability beyond that which would be possible simply using the d.c. supply alone. Again, this can be done by field control means in a continuous manner so that there is no break in the smooth curve of speed transition. Since the d.c. supply voltage will on occasions be augmented by the generator voltage, a d.c. supply providing only half the maximum required voltage of the drive motor can be employed.

A system according to the invention can provide regenerative braking all the way down to zero drive motor speed, and just as satisfactorily, all the way down to zero from reverse speeds. The system also controls the torque continuously without steps at any traction motor speed.

Expressed in terms of a method of controlling a d.c. drive motor subject to variable load, the invention comprises

connecting a d.c. generator of a motor/generator set to the d.c. drive motor, connecting the motor of the motor/generator set to a d.c. power source, and adjusting the field of the d.c. generator to control the electrical power fed to the drive motor, the method being characterised in that the generator is connected in series opposition to the d.c. power source, in that the field of the d.c. generator is adjusted until the voltage output of the d.c. generator just balances the voltage of the d.c. power source so that the drive motor is not driven, and in that the field of the generator is then varied to reduce its strength to allow the net voltage to drive the drive motor in a forward direction.

For a better understanding of the present invention, reference is made to the accompanying drawings, in which:-

Figure 1 is a block diagram representing a conventional traction motor system,

Figure 2 is a block diagram showing the basic concept behind the invention (i.e. a bypass controller system),

Figure 3 is a block diagram showing a prior art Ward-Leonard System for power transfer,

Figure 4 is a block diagram showing one embodiment of a system according to the present invention using a d.c. power supply,

Figure 5 is a block diagram showing one embodiment of a system according to the present invention using an a.c. power supply for a d.c. drive motor, and

Figure 6 is a block diagram showing the electrical effects of a system in accordance with the present invention.

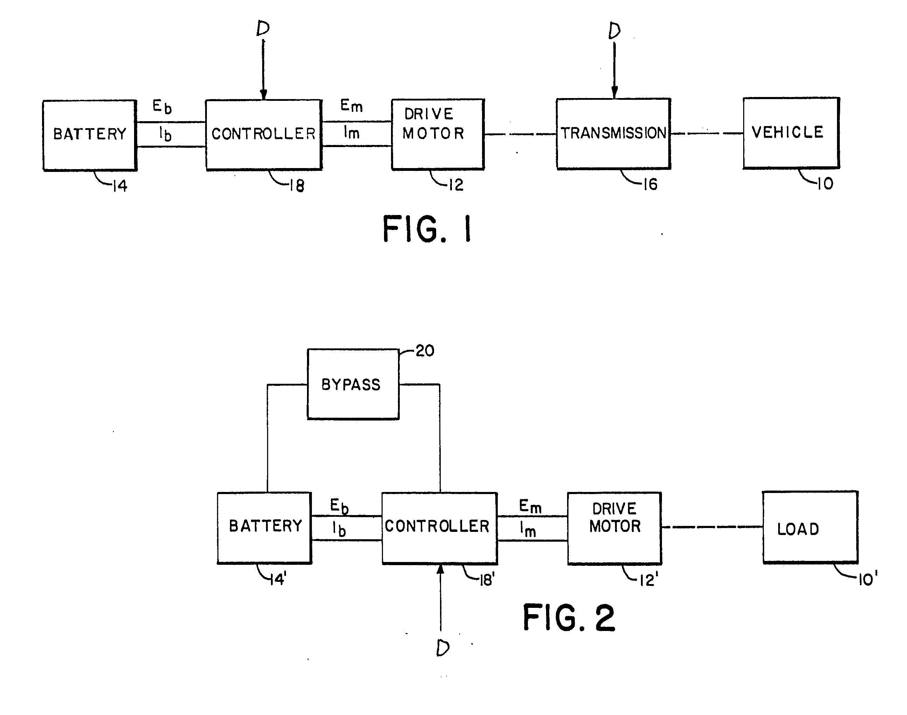

Figure 1 illustrates a conventional approach to controlling a vehicle 10 having a motor 12 supplied with electric power from a battery 14. If the system is conventional, there can be intervention by the driver to control the speed of the vehicle 10 at two points marked with the arrow D. Firstly, control can be made via a variable transmission 16 which mechanically connects the motor 12 to the vehicle and makes possible the trade-off of speed and torque. The second place for driver intervention is via a controller 18 between the battery 14 and the motor 12 which in some manner modifies the output from the battery's constant voltage, to a voltage and current appropriate to the motor 12 for a specific load.

In accordance with the present invention, one object is to eliminate the variable transmission 16, and the losses and torque discontinuities which arise due to such a transmission.

Figure 2 illustrates the principle behind the present invention wherein a drive motor 12' is supplied with a voltage $E_m$ and a current $I_m$ appropriate to its need, by intervention of a driver-operated controller 18' which modifies the voltage $E_b$ or current $I_b$ supplied to it by a battery 14'. The concept also involves some sort of a bypass or feedback means 20 to put energy back into the battery 14' when it is not needed by the drive motor 12'.

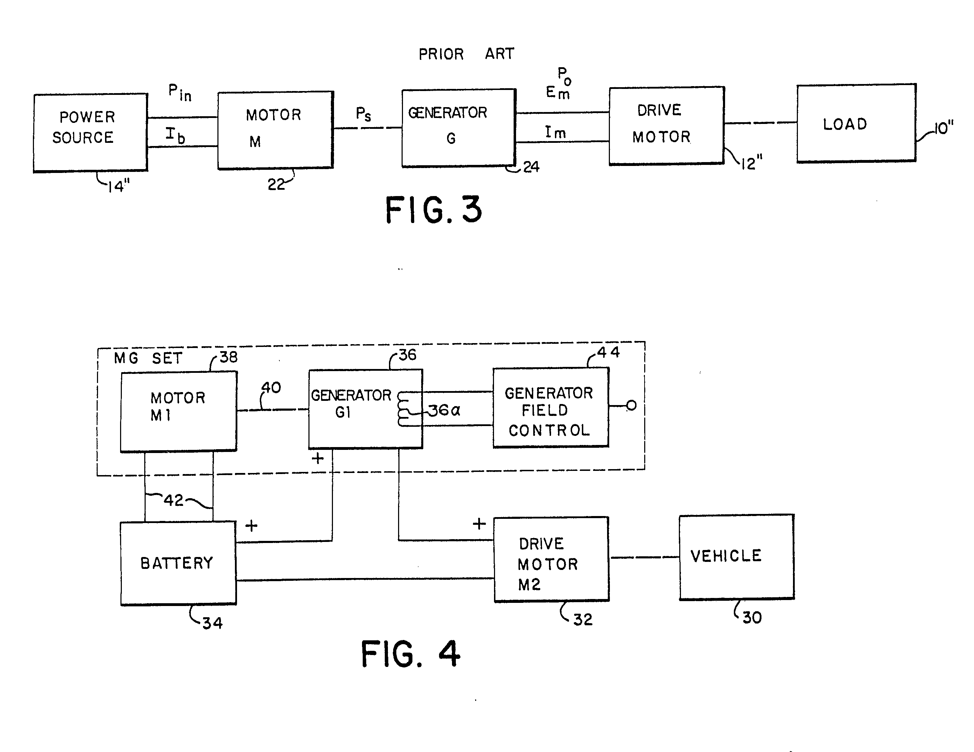

Figure 3 shows a prior art Ward-Leonard power transmission system using a motor 22 mechanically connected by a power shaft ($P_s$) to a generator 24. The motor 22 is energised from a power source 14" which may be a variable power source. A load 10" is driven by a drive motor 12" whose power is supplied by the generator 24. The Ward-Leonard System is a very good system for many applications, but it tends to be heavy and generally much too heavy for use on a motor vehicle.

Figure 4 shows a simple system according to the invention wherein a vehicle 30 is mechanically driven by a direct current drive motor 32 receiving its principal power from a direct current battery 34. However a generator 36 of a motor/generator set is connected in series opposition to the battery 34, i.e. a given polarity terminal of the generator 36 is connected to the same polarity terminal of the battery 34, e.g. the two positive terminals as shown in the drawing. Thus, voltage generated by the generator 36 opposes battery voltage in the forward direction of generator rotation. The generator 36 is driven by a motor 38 mechanically coupled to it by a shaft 40. The motor 38 receives its power via lines 42 from the battery 34, and, as will be explained hereafter, returns power to the battery 34 when the motor 38 is operating as a generator. The generator 36 has at least one field winding 36a, the current in which is variably controlled by a generator field control 44 which may be adjusted by the operator of the vehicle (e.g. manually or by foot) to achieve the required response of the drive motor 32 in driving the vehicle 30.

In the system shown in Figure 4, when the vehicle 30 is at rest, the output voltage of the generator 36 is controlled through its field winding 36a to be exactly equal to the battery voltage, so that no current will flow in the armature circuit of the drive motor 32. To accelerate and run the vehicle 30, the generator field is decreased, reducing the generated voltage and allowing the difference between the battery voltage and the generator voltage to be applied to the drive motor 32. This can be done in a continuous, as opposed to a stepwise, manner allowing for a smooth acceleration and constant mechanical power generation by the drive motor. If more power is required than that available from the full voltage of the battery, the current in the generator field winding 36a is reversed in a continuous non-stepwise movement and the polarity of the output voltage of the generator is reversed, effectively adding the generator voltage to the battery voltage and supplying a higher voltage than the battery voltage to the terminals of the drive motor.

If the drive motor 32 and the vehicle 30 is to be reversed, instead of decreasing the current in the field winding 36a, the field is increased, and the net voltage now appearing across the generator and the battery, has a reversed polarity which causes the drive motor 32 to run in the opposite direction. Again, this reversal is smooth and continuous and the speed in reverse can be controlled by the generator field control 44 just as the forward speed can be.

When the vehicle 30 is to be slowed, the system shown in Figure 4 automatically provides regenerative braking, either in the forward or reverse direction. For braking in a forward direction, the generator field is increased, raising the sum of the drive motor 32 back emf and the generator voltage above the level of the battery voltage. In this way energy can be returned to the battery 34 at any drive motor speed down to zero.

Thus, the system of Figure 4 provides a smooth continuous d.c. motor control providing continuously variable speeds, either in the forward or the backward direction permitting standstill (non-driving) condition and inherently providing regenerative braking when decelerating in either direction.

The d.c. generator 36 can be relatively light and small in size, and the motor 38 of the motor/generator set, therefore, need not be large. Yet, the capability of the system is much extended over that of one using the battery 34 alone, allowing for higher speeds and reversal of the drive motor 32 direction without switching high d.c. currents. Since the parts are small and light, conventional components can be employed ensuring relatively simple servicing and low initial cost. The control circuits are low power circuits. There is no need to provide a pulsed power supply, and one can thus avoid the consequent power loss and shortened life of components, which pulsed systems are prone to. There are no high voltage transients introduced in the system, and thus very low levels of electromagnetic interference arise when operating the system. Generally overall efficiency is quite high and the operating range is substantially extended over that which would be available using the battery alone.

The generator field control 44 is a low power field control involving no hazard or complication to the driver, and in addition to eliminating the inefficiencies of a variable mechanical transmission, provides easily controlled and smoother acceleration and decleration than is possible even with known automatic transmissions.

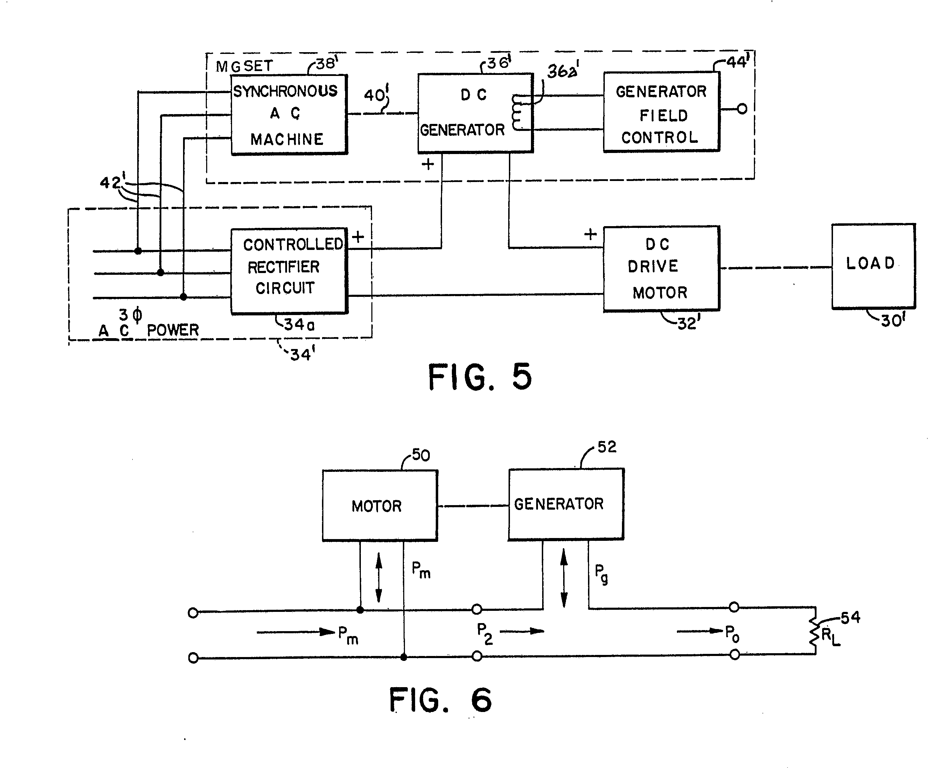

The system shown in Figure 5 is essentially the same as that of Figure 4 but uses an alternating current three-phase supply. A load 30', although probably not a vehicle in the alternating current application, still appears to a d.c. drive motor 32' as the same kind of a problem. The source of d.c. power 34' is no longer a battery, but a controlled rectifier circuit 34a which converts the three phase a.c. power input into direct current. As in the Figure 4 system, like polarity terminals of the source of d.c. power 34' and a d.c. generator 36' are connected together in connecting the generator 36' in series with the drive motor 32' across the source of d.c. power 34'. A motor 38' of the motor/generator set must, of course, be modified for the a.c. application. Advantageously, the motor 38' is a synchronous alternating current machine operable on the three-phase a.c. supply power. In a preferred embodiment, however, the mechanical coupling 40' between the generator 36' and the motor 38' is of the same nature as that employed in Figure 4. The field winding 36a', which is controlled by a generator field control 44', remains essentially the same, and the control of generator field strength, which is accomplished by an operator observing the effect upon the load 30', or, alternatively observing instrumentation, or by an automatic feedback loop, has not changed. Conceivably the components in the Figure 5 embodiment might be higher powered components than those used in Figure 4, particularly so if they are not to be carried on a moving vehicle.

In all essential respects, the operation of the device of Figure 5 is the same as that of Figure 4. However, when the synchronous motor 38' is being run as a generator by the action of the generator 36' acting as a motor, the power fed back to the source of power is three-phase a.c. just as three-phase a.c. is normally supplied directly to the motor 38' to drive it.

## Basic Analysis

One's first reaction to the present invention is to compare its motor/generator set acting as a d.c. motor controller with the classic Ward-Leonard System illustrated in Figure 3. To do this, another schematic drawing, Figure 6, showing a simplified electrical circuit of the present invention is provided.

In the Ward-Leonard System of Figure 3, input power is transmitted directly through the drive motor 22 and the generator 24 to the load 10". Therefore the power transmission equations are:

Normal operation -
$$P_o = P_{in} \times \text{motor efficiency} \times \text{generator efficiency}$$
or
$$1)\ P_o = P_{in} \cdot \text{eff}_m \cdot \text{eff}_g$$

The power rating of the motor/generator set can be derived from the requirements of the generator 24. Assuming that one wants to deliver maximum power,

$$P_g = E_g I_L = E_b I_L$$

where $P_g$ is the generator power, $E_g$ the generator voltage, $E_b$ the battery voltage and $I_L$ is the load current which is given by,

$$I_L = \frac{E_b}{R_g + R_L}$$

then

$$2)\quad P_g = \frac{E_b^2}{R_g + R_L}$$

Thus the motor/generator set must be rated to handle the maximum power delivered to the load.

Now consider the circulating motor/generator system illustrated in Figure 6 in which a motor 50 is connected across the line and a generator 52 is in series with a load 54.

Normal operation - G motoring ($E_g < E_b$)

$$3)\quad P_2 = P_{in} + P_m$$

$$4)\quad P_o = P_2 - P_g$$

$$5)\quad P_m = P_g \cdot eff_m \cdot eff_g$$

combining to get the power transfer equation, we have

$$6)\quad P_o = P_{in} - P_g(1 - eff_m \cdot eff_g)$$

Note that in this case the losses are a function of the generator power. To derive this quantity we have

$$P_g = E_g I_L$$

and the load current is

$$I_L = \frac{E_b - E_g}{R_g + R_L} \qquad \text{(assuming negligible battery resistance)}$$

then

$$7)\quad P_g = \frac{E_g E_b - E_g^2}{R_g + R_L}$$

When $E_g = E_b$, there is no generated power $P_g$ and no power is delivered to the load. Therefore, for low power levels this system is at least competitive with the Ward-Leonard System in its efficiency.

Even more important is the difference in the ratings of the machines required. The peak power occurs when $E_g = E_b/2$. Substituting this relationship into equation 7) we have

$$P_g = \frac{E_b^2/2 - E_b^2/4}{R_g + R_L}$$

and thus

$$8) \quad P_g = \frac{E_b^2}{4(R_g + R_L)}$$

Comparing this result with the calculation in equation 2) shows that the rating of the motor/generator set in the Circulating System can be 1/4 of the rating for the motor/generator set in the Ward-Leonard System. Thus the Circulating Motor/Generator System has the potential for delivering all the benefits of the Ward-Leonard System, and more, without the weight penalty normally associated with a motor/generator set controller.

Many other analyses could be made, but the above simply gives some quantitative indication of the advantage of the system of the present invention over a conventional Ward-Leonard System without considering other advantages that may be inherent in the invention.

It will be understood by those skilled in the art that many variations of the present invention are possible. Any such variation within the scope of the claims is intended to be within the scope of the present invention.

0040936

## CLAIMS

1. A system for controlling a d.c. drive motor (32, 32') feeding power to a load (30, 30') which system comprises a d.c. power source (34, 34$\underline{a}$), a motor/generator set, the motor (38, 38') of which is connected to the d.c. power source (34, 34$\underline{a}$) and the d.c. generator (36, 36') of which is connected to the d.c. drive motor (32, 32'), the d.c. generator (36, 36') having at least one field winding (36$\underline{a}$, 36$\underline{a}$") and means (44, 44') to control the current through the said at least one field winding (36$\underline{a}$, 36$\underline{a}$') characterised in that one set of common polarity terminals of the d.c. power source (34, 34$\underline{a}$) and the d.c. generator (36, 36') are connected together and the other set of common polarity terminals are connected across the d.c. drive motor so that a rest condition of the d.c. drive motor (32, 32') is obtained when the d.c. generator (36, 36') is generating a voltage $(E_g)$ which is equal to the voltage $(E_b)$ of the d.c. power source (34, 34$\underline{a}$), and so that if the load (30, 30') feeds power back to the d.c. drive motor (32, 32'), the latter acts as a generator, power therefrom being employed to drive the d.c. generator (36, 36') of the motor/generator set as a motor and thereby drive the motor (38, 38') of the motor/generator set as a generator to feed electrical power into the power source (34, 34').

2. The motor control system of claim 1 characterised in that that at least one field winding (36$\underline{a}$, 36$\underline{a}$') is regulated by a continuously variable means (44, 44') enabling smooth speed transitions in the drive motor (32, 32').

3. The motor control system of claim 1 or claim 2, characterised in that the control means (44, 44') regulating the at least one field winding (36$\underline{a}$, 36$\underline{a}$') is capable of adjusting the generator voltage $(E_g)$ to exceed the voltage $(E_b)$ of the d.c. power source (34, 34$\underline{a}$) and thereby make possible acceleration of the d.c. drive motor (32, 32') from its rest condition in either direction.

4. The motor control system of any preceding claim, <u>char-</u><u>acterised in that</u> the control means (44, 44') regulating the field of the generator (36, 36') is capable of being reversed to provide a drive voltage for the d.c. drive motor (32, 32') which exceeds that of the voltage ($E_b$) of the d.c. power source (34, 34<u>a</u>) alone.

5. The motor control system of any preceding claim, <u>characterised in that</u> a battery (34) is employed as the d.c. power source.

6. The motor control system of any of claims 1 to 4, <u>characterised in that</u> an a.c. supply with a d.c. conversion means is used as the source (34<u>a</u>) of d.c. power.

7. The motor control system of claim 6, <u>characterised in that</u> the a.c. supply provides power to an a.c. motor (38') providing the motor of the motor/generator set.

8. The motor control system of claims 6 or 7, <u>character-</u><u>ised in that</u> the a.c. supply is a three-phase supply and the motor (38') of the motor/generator set is a three-phase a.c. motor.

9. A method of controlling a d.c. drive motor (32) subject to variable load comprising connecting a d.c. generator (36) of a motor/generator set to the d.c. drive motor (32), connecting the motor (38) of the motor/generator set to a d.c. power source (34), and adjusting the field of the d.c. generator (36) to control the electrical power fed to the drive motor (32) <u>characterised in that</u> the generator (36) is connected in series opposition to the d.c. power source (34), in that the field of the d.c. generator (36) is adjusted until the voltage output ($E_g$) of the d.c. generator (36) just balances the voltage ($E_b$) of the d.c. power source (34) so that the drive motor (32) is not driven, and in that the field of the generator (36) is then varied to reduce its strength to allow the net voltage ($E_b - E_g$) to drive the drive motor (32) in a forward direction.

10. The method of claim 9, <u>characterised in that</u> the field is reversed in polarity to effectively add the voltage ($E_g$) of the d.c. generator (36) to the voltage ($E_b$) of the d.c. power source (34) to increase the voltage supplied to the drive motor (32) above that of the d.c. power source (34) alone.

11. The method of claim 9, <u>characterised in that</u> when the d.c. drive motor (32) is to be reversed, the generator field is increased in strength to effectively reverse the polarity of the voltage ($E_g - E_b$) applied across the d.c. drive motor (32).

12. The method of any of claims 9 to 11, <u>characterised in that</u> the generator field strength is varied smoothly and without interruption to provide a smooth transition in speed of the d.c. drive motor (32).

## FIG. I

BATTERY [14] — $E_b$ / $I_b$ — CONTROLLER [18] — $E_m$ / $I_m$ — DRIVE MOTOR [12] — ·—·— TRANSMISSION [16] —·—·— VEHICLE [10]

D → CONTROLLER

D → TRANSMISSION

## FIG. 2

BYPASS [20]

BATTERY [14'] — $E_b$ / $I_b$ — CONTROLLER [18'] — $E_m$ / $I_m$ — DRIVE MOTOR [12'] — ·—·— LOAD [10']

D → CONTROLLER

0040936

—/—

FIG. 3

```
┌──────────┐  P_in  ┌────────┐      ┌───────────┐  P_o  ┌─────────┐      ┌────────┐
│  POWER   │────────│ MOTOR  │  P_s │ GENERATOR │  E_m  │  DRIVE  │      │  LOAD  │
│  SOURCE  │   I_b  │   M    │──────│     G     │  I_m  │  MOTOR  │──────│        │
└──────────┘        └────────┘      └───────────┘       └─────────┘      └────────┘
     14"                22               24                 12"             10"
```

**FIG. 3**

```
┌─ MG SET ──38───────────────36──────────────────44─────┐
│  ┌──────────┐  40  ┌───────────┐    ┌──────────────┐   │
│  │  MOTOR   │──────│ GENERATOR │    │  GENERATOR   │   │
│  │   M 1    │      │    G1  36a│────│    FIELD     │──○│
│  └──────────┘      └───────────┘    │   CONTROL    │   │
│       │    │          + │           └──────────────┘   │
└───────┼────┼────────────┼──────────────────────────────┘
      42│    │            │
  ┌──────────┐  +         │        +  ┌──────────┐      ┌─────────┐
  │ BATTERY  │────────────┘───────────│  DRIVE   │      │ VEHICLE │
  │          │                        │  MOTOR   │──────│         │
  │          │────────────────────────│   M2     │      │         │
  └──────────┘                        └──────────┘      └─────────┘
      34                                   32               30
```

**FIG. 4**

0040936

**FIG. 5**

**FIG. 6**

European Patent Office

**EUROPEAN SEARCH REPORT**

0040936

Application number

EP 81 30 2164

| | **DOCUMENTS CONSIDERED TO BE RELEVANT** | | | CLASSIFICATION OF THE APPLICATION (Int. Cl.) |
|---|---|---|---|---|
| Category | Citation of document with indication, where appropriate, of relevant passages | | Relevant to claim | B 60 L 11/18<br>H 02 P 7/16 |
| X | <u>GB - A - 244 137</u> (W.P. DURTNALL)<br><br>* page 1, lines 8 to 28; page 11, line 72 to page 12, line 89; figures 1-5 * | | 1-5,<br>9-12 | |
| | <u>FR - A - 1 387 291</u> (J.C. PETIT AND P.DELEERS)<br><br>* page 2, left-hand column, line 17 to page 3, left-hand column, line 22, figure 1 * | | 1-3,<br>5,9,<br>11,12 | |
| | | | | **TECHNICAL FIELDS SEARCHED (Int. Cl.)** |
| A | <u>FR - A - 2 333 662</u> (FIAT)<br><br>* page 2, line 35 to page 4, line 39; figure 1 * | | 1,9 | H 02 P 7/16<br>5/22<br>5/24<br>B 60 L 11/18<br>11/00<br>11/04 |
| A | <u>US - A - 3 984 742</u> (FIRMA DEUTSCHE AUTOMOBILGESELLSCHAFT)<br><br>* column 4, lines 5 to 32; figure 1 * | | 1 | |

<table>
<tr><td colspan="2"></td><td rowspan="2"><b>CATEGORY OF<br>CITED DOCUMENTS</b><br><br>X: particularly relevant<br>A: technological background<br>O: non-written disclosure<br>P: intermediate document<br>T: theory or principle underlying<br>the invention<br>E: conflicting application<br>D: document cited in the<br>application<br>L: citation for other reasons<br><br>&: member of the same patent<br>family,<br>corresponding document</td></tr>
<tr><td colspan="2">The present search report has been drawn up for all claims</td></tr>
<tr><td>Place of search<br><br>The Hague</td><td>Date of completion of the search<br><br>10-09-1981</td><td>Examiner<br><br>WETHS</td></tr>
</table>

EPO Form 1503.1 06.78